# FASCICULE DE BREVET EUROPEEN

(11) **EP 2 847 015 B1**
(45) Date de publication et mention de la délivrance du brevet: **02.09.2020**
(21) Numéro de dépôt: 13719979.0
(22) Date de dépôt: 04.04.2013
(51) Int. Cl.: B60J 5/04, B60J 10/22, B60J 10/74, B60J 10/76

(54) **DISPOSITIF DE GUIDAGE POUR UN PANNEAU MUNI D'UN JOINT D'ÉTANCHÉITÉ**
FÜHRUNGS- UND DICHTUNGSLEISTE FÜR EINE FENSTERSCHEIBE
WINDOW GUIDING AND SEALING ASSEMBLY

(30) Priorité: 07.05.2012 FR 1254156
(43) Date de publication de la demande: 18.03.2015
(73) Titulaire: PSA Automobiles SA, 78300 Poissy (FR)
(72) Inventeur: PIERSON, Patrick, 70110 Senargent Mignafans (FR)
(86) Numéro de dépôt international: PCT/FR2013/050738
(87) Numéro de publication internationale: WO 2013/167818

(56) Documents cités:
- EP-A1- 0 715 981
- FR-A1- 2 886 970
- JP-A- 61 098 614
- US-A- 5 746 471
- US-A1- 2004 104 541
- US-A1- 2004 221 512
- US-A1- 2012 079 772

## Description

L'invention concerne un dispositif de guidage pour un panneau tel qu'une vitre, monté dans une structure de support, telle que la porte d'un véhicule, et coulissant par deux bords opposés dans des rails de guidage supérieurs de la structure de support, pourvus d'un joint d'étanchéité, et dans des rails de guidage inférieurs, entre une première position dans laquelle le panneau est engagé dans les rails de guidage supérieurs et une deuxième position dans laquelle le panneau est sorti des rails de guidage supérieurs et engagé dans les rails de guidage inférieurs.

Tel que connu du document US-A1-2004/0221512, les rails de guidage inférieurs étant situés à l'intérieur de la structure, ils ne sont pas pourvus d'un joint d'étanchéité mais d'un revêtement facilitant le coulissement du panneau dans ces rails. Ainsi, il y a une discontinuité entre les rails de guidage inférieurs et les rails de guidage supérieurs sur laquelle le panneau risque de buter chaque fois qu'il est déplacé de la deuxième position, également appelée la « position ouverte », vers la première position, également appelée la « position fermée ». Et chaque fois que le panneau bute sur l'extrémité du joint d'étanchéité, cet incident contribue à une usure prématurée de cette extrémité ou, pour le moins, engendre une gêne au bon fonctionnement de déplacement du panneau.

Le but de l'invention est de remédier à ces inconvénients.

Le but de l'invention est atteint avec un dispositif de guidage pour un panneau tel qu'une vitre, monté dans une structure de support, telle que la porte d'un véhicule, selon les caractéristiques de la revendication 1.

Le but de l'invention est également atteint avec un dispositif qui a comme caractéristique supplémentaire que chacun des rails de guidage supérieurs est formé par un profilé à section transversale en U et le joint d'étanchéité présente également une section transversale en U et est engagé dans les rails de guidage supérieurs pour recevoir le panneau.

Le but de l'invention est également atteint avec un dispositif qui a en plus au moins une des deux caractéristiques supplémentaires ci-après :
- à une extrémité par laquelle le panneau s'engage dans les rails de guidage supérieurs, le profilé est découpé en biais de façon que le panneau s'engage d'abord entre les ailes du profilé et ensuite seulement dans le profilé complet ;
- à une extrémité par laquelle le panneau s'engage dans les rails de guidage supérieurs, le profilé est pourvu d'une découpe en V, visible lorsque le profilé est mis à plat à cette extrémité.

D'autres caractéristiques et avantages de la présente invention ressortiront de la description ci-après d'un mode de réalisation de l'invention, la description étant faite en référence aux dessins annexés dont
- la figure 1 représente schématiquement un panneau mobile de vitrage monté dans des rails d'une structure de support comportant un dispositif de guidage selon l'invention,
- la figure 2 représente l'emplacement d'un dispositif de guidage selon l'invention dans la structure de support de la figure 1,
- la figure 3 représente en détails le dispositif de guidage selon l'invention,
- les figures 4A, 4B, 4C représentent différentes coupes transversales du dispositif de guidage selon l'invention,
- la figure 5 représente une extrémité d'un rail de guidage supérieur du dispositif de guidage selon l'invention et
- la figure 6 représente la découpe du rail de la figure 5 en version dépliée.

L'invention sera décrite ci-après dans une application à une vitre mobile 40 d'une porte P d'un véhicule automobile.

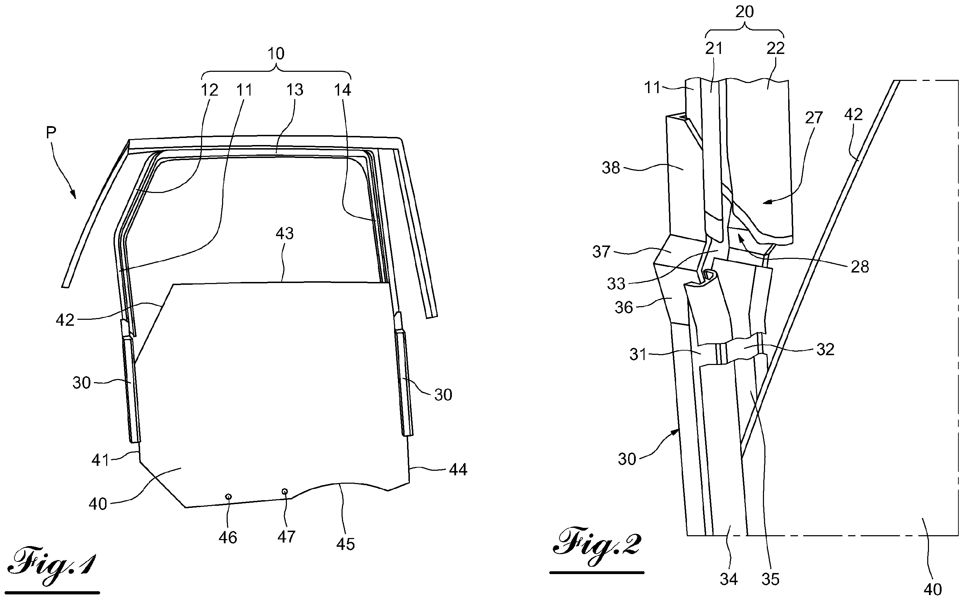

Comme le montre la figure 1, la vitre 40 est déplaçable dans un cadre de fenêtre 10 de la porte P, formé par des rails de guidage supérieurs 11 à 14, entre une première position dans laquelle la fenêtre est fermée et une deuxième position dans laquelle la fenêtre est ouverte. A cet effet, la vitre 40 est engagée par deux bords opposés latéraux 41, 44 dans les rails de guidage supérieurs 11, 14 du cadre 10 et dans des rails de guidage inférieurs 30. Les rails de guidage supérieurs 11 à 14 et les rails de guidage inférieurs 30 sont des profilés en U, les rails de guidage supérieurs 11, 14 étant engagés dans les rails de guidage inférieurs 30, ce qui forme une discontinuité entre les extrémités des rails.

Comme cela est également visible sur la figure 1, la vitre 40 comporte, outre les deux bords latéraux parallèles 41, 44, deux bords supérieurs 42, 43 s'engageant dans les rails 12, 13 du cadre 10 lorsque la vitre est en position fermée et un bord inférieur 45 pourvu de deux orifices 46, 47 pour le montage d'un lève-vitre.

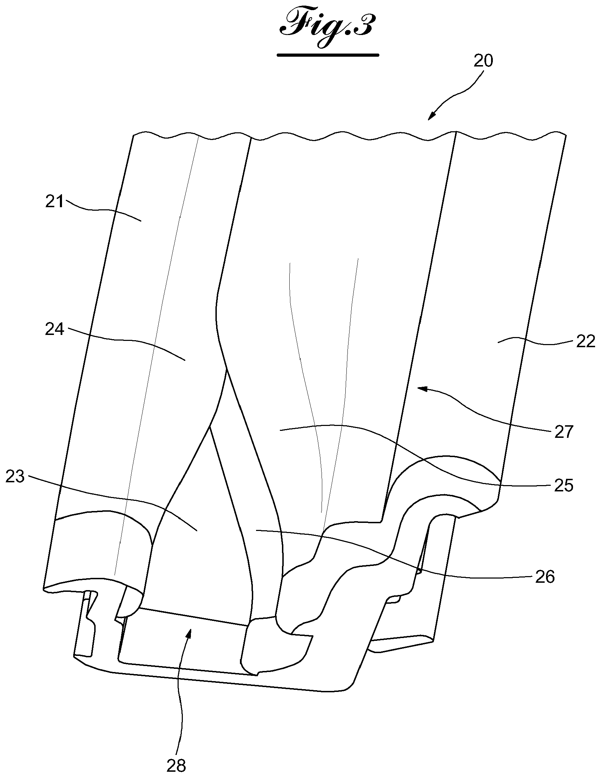

Comme le montre la figure 2, les rails de guidage supérieurs 11 à 14 sont pourvus d'un joint d'étanchéité 20 ayant lui-même aussi la forme d'un profilé en U avec des ailes 21, 22 reliées l'une à l'autre par un fond 23 (voir figure 3). Lorsque la vitre 40 s'engage dans les rails 11, 14, les bords correspondants 41, 44 de la vitre 40 s'engagent entre les ailes 21, 22 du joint d'étanchéité 20.

Les rails de guidage inférieurs 30 comportent des ailes 31, 32 reliées l'une à l'autre par un fond 33 et des revêtements souples 34, 35 recouvrant pour le moins les ailes 31, 32 afin de faciliter le coulissement de la vitre 40 dans ces rails. Chaque rail de guidage inférieur 30 présente à son extrémité supérieure un évasement 36 jusque dans lequel s'étendent les revêtements souples 34, 35. L'évasement 36 est suivi d'un léger rétrécissement 37 et d'une partie 38 du profilé en U dont la largeur est supérieure à celle du profilé en dessous de l'évasement 36. Grâce à cet élargissement relatif de l'extrémité supérieure du rail 30, le rail de guidage supérieur 11, et de manière correspondante le rail de guidage supérieur 14, s'étend jusqu'à l'intérieur de l'extrémité supérieure du rail de guidage 30.

Or, ce passage discontinu entre le rail de guidage inférieur 30 et le rail de guidage supérieur 11 ou 14 poserait le problème décrit plus haut selon lequel la vitre 40 risquerait de buter sur l'extrémité du joint d'étanchéité 20 des rails de guidage supérieurs 11, 14 en passant de sa position ouverte vers sa position fermée, si l'extrémité du joint d'étanchéité 20 n'était pas formée selon l'invention.

En effet, comme le montre la figure 3 en une vue en perspective et comme le montrent les figurent 4A, 4B et 4C en des coupes transversales du joint d'étanchéité 20 à trois niveaux successifs différents, l'extrémité inférieure du joint d'étanchéité 20 comporte, dans sa zone d'extrémité 27, au niveau de la discontinuité précitée, un cône d'engagement 28 offrant à la vitre 40, lors de son engagement dans le joint 20, une entrée large et biseautée obtenue par un agencement particulier de lèvres s'étendant à l'intérieur du joint d'étanchéité 20.

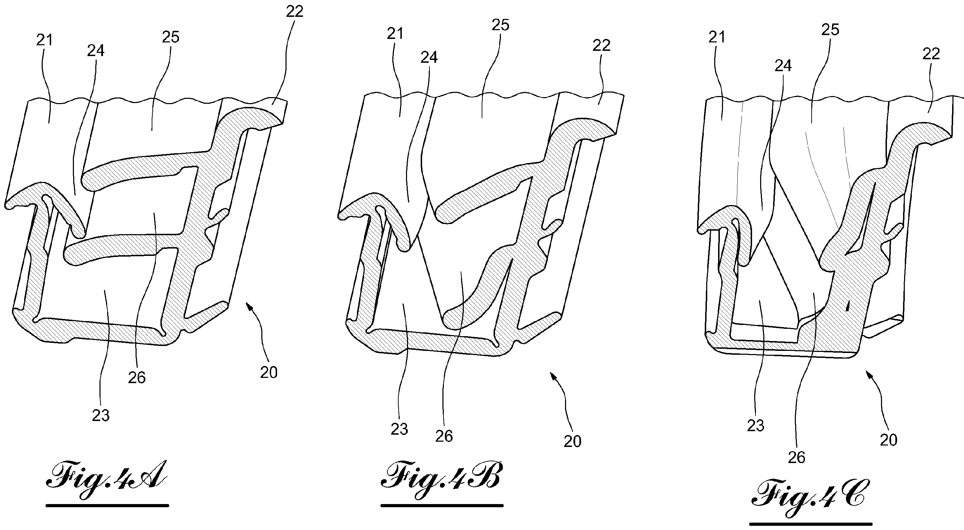

Le joint d'étanchéité 20 comporte une lèvre 24 s'étendant à partir de l'aile 21 essentiellement vers l'aile 22 et deux lèvres 25, 26 s'étendant à partir de l'aile 22 essentiellement vers l'aile 21. Les trois lèvres 24 à 26 sont en même temps courbées vers le fond 23 du joint d'étanchéité 20. En raison de leur largeur, la lèvre 24 est imbriquée aux lèvres 25, 26 lorsque la vitre 40 n'est pas engagée dans le joint d'étanchéité 20, comme cela est visible sur les figures 3 et 4A. Et lorsque la vitre 40 est déplacée de sa deuxième position vers la première position, les lèvres 24 à 26 sont écartées par la vitre 40 au fur et à mesure que cette dernière avance.

Mais pour former le cône d'engagement 28 dans la zone d'extrémité 27, les lèvres 24 à 26 sont déformées de manière permanente au moment de la fabrication du joint d'étanchéité 20. Comme le montre plus particulièrement la figure 4B, qui représente une coupe transversale du joint d'étanchéité 20 prise approximativement au tiers supérieur de la hauteur de la zone d'extrémité 27, les lèvres 24 à 26 sont courbées davantage vers le fond 23 qu'à la fin de la zone d'extrémité 27 (figure 4A). Et très proche du début de la zone d'extrémité 27 (figure 4C), les lèvres 24 à 26 sont entièrement en appui sur, ou même solidaires de, respectivement l'aile 21 et l'aile 22.

Ainsi, le cône d'engagement 28 est large à l'entrée et devient progressivement plus étroit, ce qui permet à la vitre 40 de s'engager dans le joint d'étanchéité 20 sans le heurter, lorsqu'elle est déplacée de sa position ouverte vers sa position fermée.

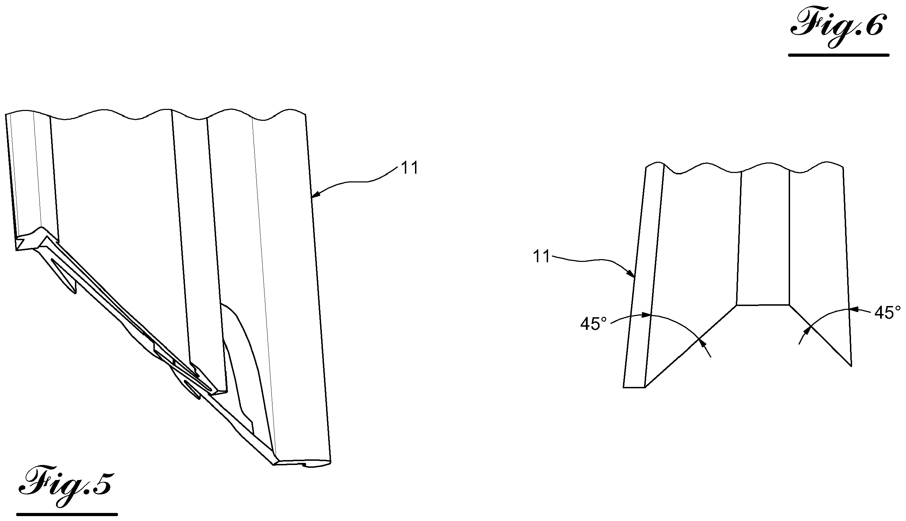

La formation du cône d'engagement 28 est avantageusement accompagnée d'une découpe en biais, c'est-à-dire en montant vers le fond du rail, de l'extrémité inférieure de chacun des rails de guidage supérieurs 11 et 14, comme cela est représenté sur la figure 5. Cette découpe inclinée est effectuée avec un angle de l'ordre de 45° par rapport à l'étendue longitudinale du rail.

Lorsque l'on déplie le profilé des rails 11 et 14, on obtient la découpe en V représentée sur la figure 6.

## Revendications

1. Dispositif de guidage pour un panneau (40) tel qu'une vitre, ledit dispositif de guidage étant apte à être monté dans une structure de support, telle que la porte d'un véhicule, ledit dispositif comportant des rails de guidage supérieurs (11, 14), qui sont pourvus d'un joint d'étanchéité (20), et des rails de guidage inférieurs (30) de telle sorte que le panneau (40) est apte à coulisser par deux bords opposés (41, 44) dans le joint d'étanchéité (20) des rails de guidage supérieurs (11, 14) et dans les rails de guidage inférieurs (30), entre :
• une première position dans laquelle le panneau (40) est engagé dans le joint d'étanchéité (20) des rails de guidage supérieurs (11, 14) ; et
• une deuxième position dans laquelle le panneau (40) est sorti du joint d'étanchéité (20) des rails de guidage supérieurs (11, 14) et engagé dans les rails de guidage inférieurs (30),
le joint d'étanchéité (20) présentant, dans une zone d'extrémité (27) d'engagement du panneau (40) dans le joint d'étanchéité (20) lorsque le panneau (40) sort de sa deuxième position, la forme d'un cône d'engagement (28), dont la largeur diminue en direction du coulissement du panneau (40) vers sa première position, et le joint d'étanchéité (20) comprend deux ailes (21, 22) comportant sur leurs faces intérieures des lèvres (24 - 26) entre lesquelles est apte à s'engager le panneau (40) et dont l'écartement est maximal à l'entrée du cône d'engagement (28) et diminue suivant la direction de coulissement du panneau (40) vers sa première position, **caractérisé en ce que**, pour assurer la diminution progressive du cône d'engagement (28), les extrémités libres des lèvres (24 - 26) sont de manière permanente en appui sur les ailes (21, 22) du joint d'étanchéité (20) à l'entrée du cône d'engagement (28) et s'écartent progressivement des ailes (21, 22) en direction de l'engagement du panneau (40) dans le cône (28).

2. Dispositif selon la revendication 1, **caractérisé en ce que** chacun des rails de guidage supérieurs (11, 14) est formé par un profilé à section transversale en U et **en ce que** le joint d'étanchéité (20) présente également une section transversale en U et est engagé dans les rails de guidage supérieurs (11, 14) pour recevoir le panneau (40).

3. Dispositif selon la revendication 2, **caractérisé en ce que**, à une extrémité par laquelle le panneau (40) est apte à s'engage dans les rails de guidage supérieurs (11, 14), le profilé est découpé en biais de façon que le panneau (40) soit apte à s'engager d'abord entre les ailes du profilé et ensuite seulement dans le profilé complet.

4. Dispositif selon la revendication 2, **caractérisé en ce que**, à une extrémité par laquelle le panneau (40) est apte à s'engager dans les rails de guidage supérieurs (11, 14), le profilé est pourvu d'une découpe en V, visible lorsque le profilé est mis à plat à cette extrémité.

## Patentansprüche

1. Führungsvorrichtung für eine Platte (40), wie z.B. eine Fensterscheibe, wobei die Führungsvorrichtung in einer Trägerstruktur, wie z.B. einer Fahrzeugtür, montierbar ist, wobei die Vorrichtung obere Führungsschienen (11, 14) aufweist, die mit einer Dichtung (20) versehen sind, und unteren Führungsschienen (30), so dass die Platte (40) um zwei gegenüberliegende Kanten (41, 44) in der Dichtung (20) der oberen Führungsschienen (11, 14) und in den unteren Führungsschienen (30) zwischen den oberen Führungsschienen (11, 14) und den unteren Führungsschienen (30) verschiebbar ist:
- eine erste Position, in der die Platte (40) mit der Dichtung (20) der oberen Führungsschienen (11, 14) in Eingriff ist; undeine zweite Position, in der die Platte (40) mit der Dichtung (20) der unteren Führungsschienen (30) in Eingriff ist.
- eine zweite Position, in der die Platte (40) aus der Dichtung (20) der oberen Führungsschienen (11, 14) ausgefahren und in die unteren Führungsschienen (30) eingerastet ist,
wobei die Dichtung (20) in einem Endbereich (27) zum Eingriff der Platte (40) in die Dichtung (20), wenn sich die Platte (40) aus ihrer zweiten Position herausbewegt, die Form eines Eingriffskegels (28) aufweist, dessen Breite in der Richtung der Verschiebung der Platte (40) zu ihrer ersten Position hin abnimmt, und die Dichtung (20) zwei Flügel (21) umfasst, 22) die auf ihren Innenseiten Lippen (24-26) aufweisen, zwischen die die Platte (40) eingreifen kann und deren Abstand am Eingang des Eingriffskegels (28) maximal ist und in der Gleitrichtung der Platte (40) in Richtung ihrer ersten Position abnimmt, **dadurch gekennzeichnet, dass** um die fortschreitende Verkleinerung des Eingriffskegels (28) zu gewährleisten, sind die freien Enden der Lippen (24 - 26) ständig in Kontakt mit den Flügeln (21, 22) der Dichtung (20) am Eingang des Eingriffskegels (28) und bewegen sich fortschreitend von den Flügeln (21, 22) in Richtung des Eingriffs der Platte (40) in den Kegel (28) weg.

2. Vorrichtung nach Anspruch 1, **dadurch gekennzeichnet, dass** jede der oberen Führungsschienen (11, 14) durch ein Profil mit U-förmigem Querschnitt gebildet ist und dass die Dichtung (20) ebenfalls einen U-förmigen Querschnitt aufweist und in die oberen Führungsschienen (11, 14) eingreift, um die Platte (40) aufzunehmen.

3. Vorrichtung nach Anspruch 2, **dadurch gekennzeichnet, dass** an einem Ende, an dem die Platte (40) in die oberen Führungsschienen (11, 14) eingreifen kann, das Profil in einem Winkel geschnitten ist, so dass die Platte (40) zunächst zwischen die Profilflansche und erst dann in das gesamte Profil eingreifen kann.

4. Vorrichtung nach Anspruch 2, **dadurch gekennzeichnet, dass** das Profil an einem Ende, mit dem die Platte (40) in die oberen Führungsschienen (11, 14) eingreifen kann, mit einem V-förmigen Ausschnitt versehen ist, der sichtbar ist, wenn das Profil an diesem Ende flachgelegt wird.

## Claims

1. A guide device for a panel (40) such as a window pane, said guide device being mountable in a supporting structure, such as a vehicle door, said device comprising upper guide rails (11, 14), which are provided with a seal (20), and lower guide rails (30) such that the panel (40) is slidable by two opposite edges (41, 44) in the seal (20) of the upper guide rails (11, 14) and in the lower guide rails (30), between the upper guide rails (11, 14) and the lower guide rails (30):
- a first position in which the panel (40) is engaged in the seal (20) of the upper guide rails (11, 14); anda second position in which the panel (40) is engaged in the seal (20) of the lower guide rails (30).
- a second position in which the panel (40) is extended from the seal (20) of the upper guide rails (11, 14) and engaged in the lower guide rails (30),
the seal (20) having, in an end region (27) for engagement of the panel (40) in the seal (20) when the panel (40) moves out of its second position, the shape of an engagement cone (28), the width of which decreases in the direction of displacement of the panel (40) towards its first position, and the seal (20) comprises two wings (21), 22) comprising on their inner faces lips (24 - 26) between which the panel (40) is able to engage and whose spacing is maximum at the entry of the engagement cone (28) and decreases in the direction of sliding of the panel (40) towards its first position, **characterised in that**, to ensure the progressive reduction of the engagement cone (28), the free ends of the lips (24 - 26) are permanently in contact with the wings (21, 22) of the seal (20) at the entrance to the engagement cone (28) and progressively move away from the wings (21, 22) in the direction of the engagement of the panel (40) in the cone (28).

2. Device according to claim 1, **characterized in that** each of the upper guide rails (11, 14) is formed by a profile with a U-shaped cross-section and **in that** the seal (20) also has a U-shaped cross-section and is engaged in the upper guide rails (11, 14) to receive the panel (40).

3. Device according to claim 2, **characterized in that**, at one end by which the panel (40) is adapted to engage in the upper guide rails (11, 14), the profile is cut at an angle so that the panel (40) is adapted to engage firstly between the profile flanges and only then in the complete profile.

4. Device according to claim 2, **characterized in that**, at one end by which the panel (40) is adapted to engage in the upper guide rails (11, 14), the profile is provided with a V-shaped cutout, which is visible when the profile is laid flat at this end.
